(19) Europäisches Patentamt
European Patent Office
Office européen des brevets

(11) **EP 2 918 961 B1**

(12) **EUROPEAN PATENT SPECIFICATION**

(45) Date of publication and mention
of the grant of the patent:
**19.06.2019 Bulletin 2019/25**

(51) Int Cl.:
*F01K 3/12* *(2006.01)*      *F01K 13/02* *(2006.01)*
*F22B 1/00* *(2006.01)*      *F22B 35/00* *(2006.01)*
*F28D 9/00* *(2006.01)*      *F28D 20/00* *(2006.01)*
*F28F 3/04* *(2006.01)*      *F28F 27/00* *(2006.01)*
*G05D 23/19* *(2006.01)*      *F03G 6/06* *(2006.01)*

(21) Application number: **14161207.7**

(22) Date of filing: **24.03.2014**

(54) **Control of a flow of fluid through a heat exchanger**

Steuerung eines Flüssigkeitsstroms durch einen Wärmetauscher

Commande d'un écoulement de fluide à travers un échangeur de chaleur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.03.2014 EP 14158642**

(43) Date of publication of application:
**16.09.2015 Bulletin 2015/38**

(73) Proprietors:
• **Alfa Laval Corporate AB**
**221 00 Lund (SE)**
• **Alfa Laval Packinox**
**75116 Paris (FR)**

(72) Inventor: **Alenda, Franck**
**FR-71880 Chatenoy Le Royal (FR)**

(74) Representative: **Alfa Laval Attorneys**
**Alfa Laval Corporate AB**
**Patent Department**
**P.O. Box 73**
**221 00 Lund (SE)**

(56) References cited:
EP-A1- 2 275 649      WO-A2-2012/093354
DE-A1-102005 043 952      DE-A1-102009 017 423
DE-B3-102006 058 139      FR-A1- 2 844 040
US-A1- 2008 289 793      US-A1- 2011 100 611

• **KELLY B ET AL: "Thermal Storage Commercial
Plant Design Study for a 2-Tank Indirect Molten
Salt System - Final Report", INTERNET CITATION,
July 2006 (2006-07), pages 1-32, XP002740475,
Retrieved from the Internet:
URL:http://www.nrel.gov/docs/fy06osti/4016
6.pdf [retrieved on 2015-06-03]**
• **PIYUSH SABHARWALL ET AL: "Preliminary
Design for Conventional and Compact Secondary
Heat Exchanger in a Molten Salt Reactor",
PROCEEDINGS OF THE ASME SUMMER HEAT
TRANSFER CONFERENCE 2012 : PRESENTED
AT ASME 2012 SUMMER HEAT TRANSFER
CONFERENCE, JULY 8 - 12, 2012, RIO GRANDE,
PUERTO RICO, ASME, NEW YORK, N.Y , vol. 1,
no. HT2012-58007 8 July 2012 (2012-07-08),
XP002740476, ISBN: 978-0-7918-4477-9
Retrieved from the Internet:
URL:http://www5vip.inl.gov/technicalpublic
ations/documents/5517225.pdf [retrieved on
2015-06-03]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

<u>Technical Field</u>

The invention relates to a method for controlling a flow of fluid in a solar thermal plant, whereby the fluid flows through a plate heat exchanger that has two fluid channels for passing two fluids through the heat exchanger, such that heat is transferred between the fluids. A flow regulator is arranged to regulate any of a flow of the first fluid and the second fluid.

A method according to the preamble of claim 1 is e.g. known from EP 2 275 649 A1.

<u>Background Art</u>

Today many different types of plate heat exchangers exist and are employed in various applications depending on their type. Generally, a heat exchanger has at least a first channel and a second channel for a first respectively a second fluid. The first fluid enters the first channel via a first inlet port, passes through the first channel and exists the channel vie a first outlet port. The second fluid enters the second channel via a second inlet port, passes through the second channel and exists the channel via a second outlet port. The channels may each have the form of a number of multiple channels, and the first and second channel are separated from each other such that the fluids do not mix. The flow of fluids is either concurrent or countercurrent.

When one of the fluids is warmer than the other, heat is transferred from the warmer fluid to the colder via elements that form the fluid channels, i.e. elements that separate the fluids from each other. Examples of such elements are the heat transfer plates in plate heat exchangers, the tubes in shell-and-tube heat exchangers, the spirals in spiral heat exchangers, the pipes of pipe heat exchangers etc. It is often desired that the transfer of heat from the warm fluid to the colder fluid is as efficient as possible.

To accomplish efficient transfer of heat a number of different techniques have been applied. For example, for plate heat exchangers different patterns of the plates are used for increasing turbulence and thus the transfer of heat. Different materials with different heat convection properties and with different thicknesses are also used etc. Other techniques focus on regulating the flow of fluids so that the heat transfer efficiency increases.

Measures that are taken for increasing transfer of heat more efficiently may affect other factors negatively, such as a pressure drop over the heat exchanger and the structural integrity if the elements that separates the fluids from each other. Regulating the flow of fluids may sometimes cause unwanted effects in other parts of a system that the heat exchanger is part of.

Several techniques for improving the heat transfer efficiency are disclosed in the prior art and many indeed successfully increases the transfer of heat. However, improvements are always desired.

<u>Summary</u>

It is an object of the invention to at least partly overcome one or more of the above-identified limitations of the prior art. In particular, it is an object to provide a method that may increase the heat transfer efficiency of a heat exchanger.

To solve these objects a method for controlling a flow of fluid through a heat exchanger is provided. The heat exchanger comprises a first fluid channel for passing a first fluid through the heat exchanger and a second fluid channel for passing a second fluid through the heat exchanger, such that heat is transferred from the first fluid to the second fluid when the first fluid is warmer than the second fluid. A flow regulator is arranged to regulate i) a flow of the first fluid passed through the heat exchanger, and/or ii) a flow of the second fluid passed through the heat exchanger. The method comprises: obtaining a first temperature of the first fluid before it passes through the heat exchanger; obtaining a second temperature of the first fluid after it has passed through the heat exchanger; obtaining a third temperature of the second fluid before it passes through the heat exchanger; obtaining a fourth temperature of the second fluid after it has passed through the heat exchanger; determining a first difference by calculating a difference between the first temperature and the fourth temperature; determining a second difference by calculating a difference between the second temperature and the third temperature; determine a first error value by calculating a difference between a first, predetermined value and the first difference; determine a second error value by calculating a difference between a second, predetermined value and the second difference; and controlling the flow regulator in dependence of the first error value and the second error value.

The method is advantageous in that it is applicable for all types of heat exchangers that operate with two independent fluids where heat is transferred from one of the fluids to the other. This includes plate heat exchangers, tube and shell heat exchangers, brazed heat exchangers, welded heat exchangers and heat exchangers where gaskets are arranged in between the heat transfer plates. The flow of the fluids may be concurrent or countercurrent. The method improves the efficiency of a heat exchanger by optimizing a fluid flow rate and maintaining constant or predefined variation of fluid outlet temperatures. Also, the efficiency of the heat exchange may be improved by the method equilibrating the fluid flow rates proportionally to their thermal capacity, taking into account latent and sensible heats of each fluid, for example in case of thermal storage in thermal solar plant. The method also enables relative fast response to process variations, may reduce mechanical damages to the heat exchanger due to a high thermal gradient in the heat exchanger and may, in comparison with manual control, reduce operational mistakes.

The method may comprise controlling the flow regulator so as to minimize the first error value and minimize the second error value.

The method may comprise: determining a first correction factor based on a proportional term of the first error value; determining a second correction factor based on a proportional term of the second error value; and controlling the flow regulator in dependence of the first and second correction factors so as to minimize the first error value and the second error value.

The method may comprise: determining the first correction factor based on an integral term of the first error value, and determining the second correction factor based on an integral term of the second error value.

The method may comprise: determining the first correction factor based on a derivative term of the first error value; and determining the second correction factor based on a derivative term of the second error value.

The method may comprise, when the flow of the first fluid and the flow of the second fluid are reversed and when the first fluid is colder than the second fluid for transferring heat from the second fluid to the first fluid: obtaining the first temperature by measuring a temperature of the second fluid before it passes through the heat exchanger; obtaining the second temperature by measuring a temperature of the second fluid after it has passed through the heat exchanger; obtaining the third temperature by measuring a temperature of the first fluid before it passes through the heat exchanger; and obtaining the fourth temperature by measuring a temperature of the first fluid after it has passed through the heat exchanger.

The first fluid is heated by solar energy and the second fluid may be used for storing heat. The method may then comprise: transferring the second fluid from a cold storage to a hot storage via the heat exchanger, such that heat is transferred from the first fluid to the second fluid; and transferring the second fluid from the hot storage to the cold storage via the heat exchanger, when the flow of the first fluid and the flow of the second fluid are reversed such that heat is transferred from the second fluid to the first fluid.

In one embodiment the controlling of the flow regulator in dependence of the first error value and the second error value regulates the flow of the second fluid only.

The proportional term may comprise a proportional gain that has a value of 0.005 to 0.35. The integral term may comprise an integral gain that has a value of 0.006 to 0.20. The derivative term may comprise a derivative gain that has a value of 0.35 to 2.0.

According to the invention the method is provided for controlling a flow of fluid in a solar thermal plant. This method comprises any of the embodiments described above for controlling a flow of fluid through a heat exchanger. The solar thermal plant comprises the heat exchanger, the flow regulator, a heat collector for heating the first fluid, and a cold storage and a hot storage for the second fluid. The flow regulator is arranged to regulate a flow of the second fluid for passing it in i) a first direction from the cold storage, through the heat exchanger and to the hot storage and in ii) a second direction from the hot storage, through the heat exchanger and to the cold storage. The method for operating the solar plant also comprises: controlling the flow regulator for minimizing the first error value and the second error value when passing the second fluid in the first direction as well as when passing the second fluid in the second direction.

The method provided for controlling a flow of fluid in a solar thermal plant comprises controlling the flow through a heat exchanger that comprises 200 to 900 heat transfer plates of which each has: a plate thickness of 0.8 mm to 1.5 mm; a plate length of 6 m to 14 m; a plate width of 0.7 m to 2 m; a gap of 2.5 mm to 8 mm between the heat transfer plates; and a corrugation angle of 15° to 45°.

Still other objectives, features, aspects and advantages of the invention will appear from the following detailed description as well as from the drawings.

<u>Brief Description of the Drawings</u>

Embodiments of the invention will now be described, by way of example, with reference to the accompanying schematic drawings, in which

Fig. 1 is a schematic view of a solar thermal plant in charge mode when the thermal storage medium is the cold fluid,
Fig. 2 is a schematic view of the solar thermal plant of Fig. 1, but in discharge mode when the thermal storage medium is the hot fluid,
Fig. 3 is a flow chart of a method of controlling a flow of fluid through a heat exchanger that is part of the solar thermal plant of Figs 1 and 2,
Fig. 4 is a block diagram of a device that implements the method of Fig. 3,

Figs 5 and 6 are diagrams showing flow rate and HAT/CAT when a simulated solar thermal plant is in a charge mode, and

Figs 7 and 8 are diagrams showing flow rate and HAT/CAT when a simulated solar thermal plant is in a discharge mode.

Detailed description

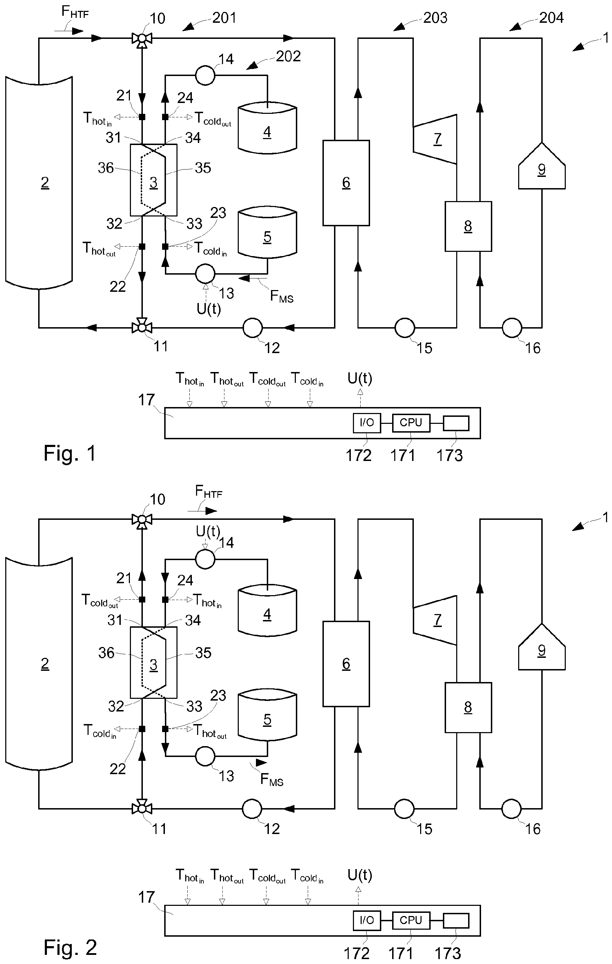

With reference to Fig. 1 a solar thermal plant 1 is illustrated. The solar thermal plant 1 comprises four circuits 201, 202, 203, 204 that interact with each other so to generate electricity from solar energy.

The first circuit 201 circulates thermal oil (HTF) $F_{HTF}$ and comprises a heat collector 2, a first heat exchanger 3, a second heat exchanger 6, a first valve 10, a second valve 11 and a pump 12 for circulating the HTF in the first circuit 201.

The second circuit 202 circulates a thermal storage medium $F_{MS}$ and comprises the first heat exchanger 3, a hot storage 4 and a cold storage 5 for the thermal storage medium and a first pump 13 and a second pump 14 for transporting the thermal storage medium in either direction between the hot storage 4 and the cold storage 5. The storage medium is molten salt, such as a mixture of 60% $NaNO_3$ and 40% $KNO_3$ by weight.

The third circuit 203 circulates feed water and comprises the second heat exchanger 6, a turbine 7, a condenser 8 and a pump 15 for circulating the feed water in the third circuit 203.

The fourth circuit 204 circulates water and comprises the condenser 8, a cooling tower 9 and a pump 16 for circulating the water in the fourth circuit 204.

The heat collector 2 has the form of rows of highly reflective parabolic mirrors mounted on support structures, which are tiltable about an axis that typically is arranged in the north-south direction, to track the sun as it moves from east to west. At a focal line of the parabolic mirrors specially coated stainless steel tubes called the receivers are mounted. The HTF flows through the receivers and may be heated to a temperature of 390 °C. Exactly to which temperature the HTF is heated may be regulated by e.g. the flow rate of the circulation of the HTF in the first circuit 201.

The thermal energy that is acquired by the HTF in the first circuit 201 is transferred to the feed water through the second heat exchanger 6 to produce superheated steam, which drives the turbine 7 that in turn is coupled to a generator (not shown) that generates electricity. The steam that leaves the turbine 7 enters the condenser 8 where it is condensed in a wet cooling process that draws cooling water from the cooling tower 9.

Thermal storage is necessary as a buffer to take care of cloud cover, operation of the plant beyond sunset and to meet peak demand in electricity. To accomplish this, the size of the heat collector 2 is greater than that required to generate a rated electrical power of the solar thermal plant 1. The excess solar thermal energy available is utilized to heat a higher mass low rate of HTF in the receiver tubes. A predetermined quantity of HTF continues to the second heat exchanger 6 to produce superheated steam while the excess is fed into the first heat exchanger 3. In the first heat exchanger 3 the HTF transfers heat to the thermal storage medium, which comes from the cold storage 5 and is passed on to the hot storage 4 where it is stored.

The heat exchanger 3 is a conventional, welded plate heat exchanger and has a first fluid channel 35 for passing the HTF through the heat exchanger 3 and a second fluid channel 36 for passing the thermal storage medium through the heat exchanger 3. The first fluid channel 35 and the second fluid channel 36 typically each comprises a number of sub-channels, where every second sub channel in the first heat exchanger 3 belongs to the first fluid channel 35 and where every other, second fluid channel belongs to the second fluid channel 36. Heat is thereby transferred from the HTF to the thermal storage medium when the HTF is warmer than the thermal storage medium.

The first pump 13 regulates a flow (mass low rate) of the thermal storage medium that is passed from the cold storage 5 to the hot storage 4, via the first heat exchanger 3.

Fig. 1 illustrates the solar thermal plant 1 when excess energy is generated by the heat collector 2, where HTF is fed into the first heat exchanger 3 to transfer heat to the thermal storage medium that is pumped by the first pump 13, from the cold storage 5, through the first heat exchanger 3 and into the hot storage 4. The HTF is then fed into the first heat exchanger 3 via a first port 31, passes the first fluid channel 35 and exits via a second port 32. The thermal storage medium is fed into the first heat exchanger 3 via a third port 33, passes the first fluid channel 35 and exits via a fourth port 34.

The excess energy, or heat, in the HTF is via the first heat exchanger 3 transferred to the thermal storage medium which is fed from the cold storage 5, into the first heat exchanger 3 and to the hot storage 4 by the first pump 13. The first pump 13 receives a control signal U(t) that regulates the pump speed, i.e. the regulates the mass flow rate that the first pump 13 provides for the thermal storage medium for pumping it from the cold storage 5 to the hot storage 4. The solar thermal plant 1 is said to be in a charge mode when excess energy is transferred to the thermal storage medium from the HTF.

Fig. 2 illustrates the solar thermal plant 1 during complete cloud cover or after sunset, where the first valve 10 and second valve 11 are set such that the flow of HTF through the heat collector 2 is closed and where the direction of the flow of HTF through the first heat exchanger 3 and the second heat exchanger 6 is reversed, which may be accomplished by the pump 12 in the first circuit 201. The second pump 14 then pumps the thermal storage medium from the hot storage 4, to the first heat exchanger 3 from which it exits and thereafter enters the cold storage 5. In this process the HTF receives heat from the thermal storage medium such that it, in the second heat exchanger 6, may heat the feed water to produce superheated steam that drives the turbine 7. Also, in case the HTF flows through the heat collector 2 but is not sufficiently heated and when there is thermal fluid available in the hot storage 4, then heat may be transferred from the thermal fluid medium to the HTF for boosting power generation.

The second pump 14 receives a control signal U(t) that regulates the pump speed, i.e. the regulates the mass flow rate that the second pump 14 provides for the thermal storage medium for pumping it from the hot storage 4 to the cold storage 5. The solar thermal plant 1 is said to be in a discharge mode when energy is transferred from the thermal storage medium to the HTF.

The operation and structure of the solar thermal plant 1 and its components described so far are implemented according to known principles and techniques and any type of components that are suitable for the use described above may be employed.

It is important to ensure that all components in the solar thermal plant 1 operate efficiently, including the first heat exchanger 3. To improve the efficiency of the first heat exchanger 3, it is preferable to control the flow rates of the HTF and thermal storage medium, e.g. for maintaining constant temperatures or a predetermined temperature variation of the HTF and the thermal storage medium when the fluid exits the first heat exchanger 3. It is also desired to improve the efficiency of the heat exchange in the first heat exchanger 3 by equilibrating the flow rates of the HTF and the thermal storage medium proportionally to their thermal capacity, taking into account the latent and sensitive heats of each fluid.

Such flow control is relevant for stable processes as well as for more transient processes where regular change of flows or/and inlet temperatures or/and inlet pressures occur, such as in the heat exchange process performed in the solar thermal plant 1. For the transient process in the solar thermal plant 1, automatic flow rate control is used for improving the overall efficiency of the unit, i.e. the total efficiency of the transfer of heat, including in both charge mode and discharge mode. This introduces advantages like fluid control that reacts properly to variations in the flows of fluids in the solar thermal plant 1, and an increased overall efficiency that reduces mechanical damages to the components due to high thermal gradients in e.g. the first heat exchanger 3. Automatic flow rate control often also reduces operating mistakes that otherwise may have negative consequences for the process and the life time of the various components of the solar thermal plant 1.

The automatic flow rate control is implemented as a method for controlling a flow of fluid through the first heat exchanger 3. The control is based on temperature measurements and provides accurate control since temperature measurements are an accurate type of measurement, especially under real time process conditions and compared to e.g. control that would use flow measurements as input. A temperature measurement is also a good indicator for defining a thermal efficiency of the first heat exchanger 3. Thus, by using temperature measurements the control is driven directly by the data that should be improved.

The method for controlling the flow of fluid through the first heat exchanger 3 is performed by a control unit 17 that controls the first pump 13 when the solar thermal plant 1 is in the charge mode and controls the second pump 14 when the solar thermal plant 1 is in the discharge mode. To accomplish this, the control unit 17 sends the control signal U(t) that regulates the speed of the respective pump 13, 14. In this context the pumps 13, 14 operates as a flow regulator since they regulate the flow of thermal storage medium. Instead of using the illustrated pumps as flow regulators, a different pump configuration and/or control valves may be used.

Turning back to Fig. 1, the method requires input of data which is received from temperature sensors 21, 22, 23, 24 that reads temperature values at the ports 31, 32, 33, 34 of the first heat exchanger 3. Specifically, a first temperature sensor 21 measures a temperature $T_{hot_{in}}$ at the first port 31, a second temperature sensor 22 measures a temperature $T_{hot_{out}}$ at the second port 32, a third temperature sensor 23 that measures a temperature $T_{cold_{in}}$ at the third port 33 and a fourth temperature sensor 24 measures a temperature $T_{cold_{out}}$ at the fourth port 34.

The HTF that enters and exits through the first and second ports 31, 32 of the first heat exchanger 3 is referred to as a "first fluid" $F_{HTF}$ and the thermal storage medium that enters and exits through the third and fourth ports 33, 34 of the first heat exchanger 3 is referred to as a "second fluid" $F_{MS}$. The measured temperatures readings $T_{hot_{in}}, T_{hot_{out}}, T_{cold_{in}}, T_{cold_{out}}$ are transmitted to the control unit 17, such that the readings are obtained by the control unit 17 as a first temperature $T_{hot_{in}}$ of the first fluid $F_{HTF}$ before it passes through the heat exchanger 3, as a second temperature $T_{hot_{out}}$ of the first fluid $F_{HTF}$ after it has passed through the heat exchanger 3, as a third temperature $T_{cold_{in}}$ of the second fluid $F_{MS}$ before it passes through the heat exchanger 3, and as a fourth temperature $T_{cold_{out}}$ of the second fluid $F_{MS}$ after it has passed through the heat exchanger 3.

In detail and with further reference to Fig 9, the control unit 17 also comprises a central processing unit 171 (CPU), an electronic input/output interface 172 (I/O) and a memory unit 173. The processing unit 17 is via its interface 172 and via conventional connectors (not shown) connected to the temperature sensors 21, 22, 23, 24 and to the flow regulator in form of the first pump 13 and the second pump 14.

As indicated, the processing unit 17 may obtain the first, second, third and fourth temperature readings $T_{hot_{in}}, T_{hot_{out}}, T_{cold_{in}}, T_{cold_{out}}$ and may, intermittently or continuously, regulate a flow of the second fluid $F_{MS}$ passed through the heat exchanger 3 by sending the control signal U(t) to any of the pumps 13, 14. The control unit 17 may also regulate a flow of the first fluid $F_{HTF}$ passed through the heat exchanger 3 by sending a corresponding control signal to the pump 12 the feeds the HTF.

Turning back to the control unit 17, the CPU 171 is connected to and controls the electronic input/output interface 172 and stores data on respectively reads data from the memory unit 173. The CPU 171 is a central processing unit or microprocessor of a conventional type and represents the portion of the control unit 17 that is capable of carrying out instructions of a computer program which is stored in e.g. the memory unit 173. The CPU 171 is the primary element carrying out or initiating the functions of the processing unit control unit 17, and in particular the method for controlling the flow of fluid through the first heat exchanger 3, which is described in more detail below. The input/output interface 172 allows an operator to input operation parameters and various values to be used by the CPU 171. Such values are typically predetermined values that may be used in the method. The input/output interface 172 allows the control unit 17 to output information about the control of the fluid flow and the temperature readings from the sensors 21, 22, 23, 24.

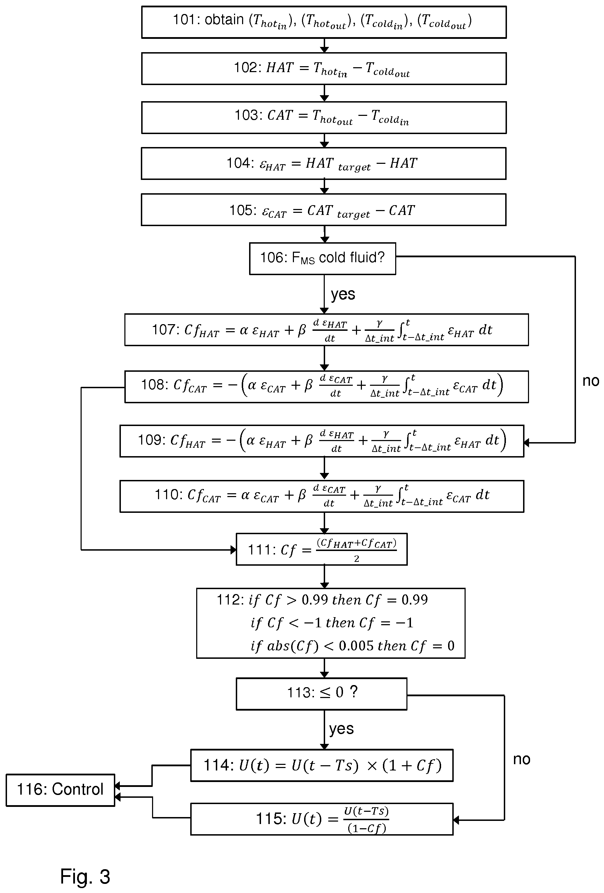

With reference to Fig. 3 a flow chart of a method performed by the control unit 17 is illustrated. The method revolves around initiating a control signal that improves the heat transfer efficiency of the first heat exchanger 3. The method is typically automated and operates by repeatedly executing a sequence of steps 101-116. In illustrated example the method may be implemented by the control unit 17, i.e. the control unit 17 is configured to perform the steps 101-116. This means that the solar thermal plant 1, also is, since it comprises the control unit 17, configured to perform the steps 101-116.

The method is exemplified on the solar thermal plant 1 of Fig. 1 when it is in the charge mode and on the solar thermal plant 1 when it is in the discharge mode as illustrated in Fig. 2. In the following, the "hot fluid" refers to the fluid that, when it enters the first heat exchanger 3, is warmer the other fluid when the other fluid enters the first heat exchanger 3. The other fluid is then the "cold fluid". Thus, when the solar thermal plant 1 is in the charge mode the hot fluid is the HTF and the cold fluid is the thermal storage medium. When the solar thermal plant 1 is in the discharge mode then the hot fluid is the thermal storage medium and the cold fluid is the HTF. The hot fluid provides temperature readings $T_{hot_{in}}$ and $T_{hot_{out}}$ while the cold fluid provides the temperature readings $T_{cold_{in}}$ and $T_{cold_{out}}$, see Figs 1 and 2.

In a first step 101 the first, second, third and fourth temperature readings $T_{hot_{in}}, T_{hot_{out}}, T_{cold_{in}}, T_{cold_{out}}$ are obtained by the control unit 17 from the temperature sensors 21, 22, 23, 24.

In a next step 102 a so called hot approach temperature $HAT$, which is referred to as a first difference $HAT$, is calculated by calculating a difference between the first temperature $T_{hot_{in}}$ and the fourth temperature $T_{coldout}$ (i.e. the difference between the in-temperature of the hot fluid and the out-temperature of the cold fluid):

$$HAT = T_{hot_{in}} - T_{cold_{out}}$$

In a next step 103 a so called cold approach temperature $CAT$, which is referred to as a second difference $CAT$, is calculated by calculating a difference between the second temperature $T_{hotout}$ and the third temperature $T_{cold_{in}}$ (i.e. the difference between the out-temperature of the hot fluid and the in-temperature of the cold fluid):

$$CAT = T_{hot_{out}} - T_{cold_{in}}$$

In a next step 104 a first error value $\varepsilon_{HAT}$ is determined by calculating a difference between a first, predetermined value $HAT_{target}$ and the first difference $HAT$. The predetermined value $HAT_{target}$ is a target (desired) hot approach temperature value and may by be adjusted before or during operation of the solar thermal plant 1. The first error value $\varepsilon_{HAT}$ is thus determined as the difference between the target and the current value of $HAT$:

$$\varepsilon_{HAT} = \left(HAT_{target} - HAT\right)$$

In a next step 105 a second error value $\varepsilon_{CAT}$ is determined by calculating a difference between a second, predetermined value $CAT_{target}$ and the second difference $CAT$. The predetermined value $CAT_{target}$ is a target (desired) cold approach temperature value and may by be adjusted before or during operation of the solar thermal plant 1. $CAT_{target}$ may be related to the value of $HAT_{target}$ and each of $CAT_{target}$ and $HAT_{target}$ may depend on characteristics of the first heat exchanger 3. The second error value $\varepsilon_{CAT}$ is thus determined as the difference between the target and the current value of $CAT$:

$$\varepsilon_{CAT} = \left(CAT_{target} - CAT\right)$$

In a next step 106 it is determined that a first set of steps 107 and 108 are performed if the solar thermal plant 1 is in the charge mode, i.e. if the HTF is the "hot fluid" that shall transfer heat to the thermal storage medium, which then is the "cold fluid". If this is not the case, i.e. when the solar thermal plant 1 is in the discharge mode, then a second set of steps 109 and 110 are performed and then the thermal storage medium is the "hot fluid" that shall transfer heat to the HTF which then is the "cold fluid".

As part of steps 107, 108, 109 and 110 a hot approach temperature derivate $\frac{d\,\varepsilon_{HAT}}{dt}$ is calculated over a time step $Ts$:

$$\frac{d\,\varepsilon_{HAT}}{dt} = \frac{HAT(t) - HAT(t - Ts)}{Ts}$$

A cold approach temperature derivate $\frac{d\,\varepsilon_{CAT}}{dt}$ is also calculated over time step $Ts$:

$$\frac{d\,\varepsilon_{CAT}}{dt} = \frac{CAT(t) - CAT(t - Ts)}{Ts}$$

A HAT (hot approach temperature) error integral $\int_{t-\Delta t\_int}^{t} \varepsilon_{HAT}\,dt$ on the period $[t - \Delta t\_int;\ t]$ is also calculated. This integral may be numerically calculated by the following sum:

$$\sum_{n=1}^{N} \left( \frac{\varepsilon_{HAT}(t-(n-1)Ts) + \varepsilon_{HAT}(t-n\,Ts)}{2} \right) \times Ts,\ \text{with } N = int\left( \frac{\Delta t_{int}}{Ts} \right).$$

A CAT (cold approach temperature) error integral $\int_{t-\Delta t\_int}^{t} \varepsilon_{CAT}\,dt$ on the period $[t - \Delta t\_int;\ t]$ is also calculated. This integral may be numerically calculated by the following sum:

$$\sum_{n=1}^{N} \left( \frac{\varepsilon_{CAT}(t-(n-1)Ts) + \varepsilon_{CAT}(t-n\,Ts)}{2} \right) \times Ts,\ \text{with } N = int\left( \frac{\Delta t_{int}}{Ts} \right).$$

In these calculations $t$ is the current time, $\Delta t_{int}$ is the period of calculation of the integrals of CAT and HAT (may be taken equal to 20 seconds but could be adjusted). $\alpha$ is a proportional coefficient, $\beta$ is a derivate coefficient and $\gamma$ is an integral coefficient, while $Ts$ is a time step in seconds. $Ts$ may be e.g. 5 seconds and may be adjusted.

When steps 107 and 108 are performed a hot approach correction factor $Cf_{HAT}$ is calculated in step 107 as:

$$Cf_{HAT} = \alpha\,\varepsilon_{HAT} + \beta\,\frac{d\,\varepsilon_{HAT}}{dt} + \frac{\gamma}{\Delta t\_int} \int_{t-\Delta t\_int}^{t} \varepsilon_{HAT}\,dt$$

while a cold approach correction factor $Cf_{CAT}$ is calculated in step 108 as:

$$Cf_{CAT} = -\left( \alpha\,\varepsilon_{CAT} + \beta\,\frac{d\,\varepsilon_{CAT}}{dt} + \frac{\gamma}{\Delta t\_int} \int_{t-\Delta t\_int}^{t} \varepsilon_{CAT}\,dt \right)$$

Thus, step 107 comprises determining a hot approach correction factor, also referred to as a first correction factor $Cf_{HAT}$, based on a proportional term $\alpha\,\varepsilon_{HAT}$ of the first error value $\varepsilon_{HAT}$, based on a derivative term $\beta\,\frac{d\,\varepsilon_{HAT}}{dt}$ of the first error value $\varepsilon_{HAT}$ and based on a an integral term $\gamma \int \varepsilon_{HAT}$ of the first error value $\varepsilon_{HAT}$. Step 108 comprises determining a cold approach correction factor, also referred to as a second correction factor $Cf_{CAT}$, based on a proportional

term $\alpha\,\varepsilon_{CAT}$ of the second error value $\varepsilon_{CAT}$, based on a derivative term $\beta\,\dfrac{d\,\varepsilon_{CAT}}{dt}$ of the second error value $\varepsilon_{CAT}$ and based on a an integral term $\gamma\int\varepsilon_{CAT}$ of the second error value $\varepsilon_{CAT}$.

When steps 109 and 110 are performed the hot approach correction factor $Cf_{HAT}$ is calculated in step 109 as:

$$Cf_{HAT} = -\left(\alpha\,\varepsilon_{HAT} + \beta\,\frac{d\,\varepsilon_{HAT}}{dt} + \frac{\gamma}{\Delta t\_int}\int_{t-\Delta t\_int}^{t}\varepsilon_{HAT}\,dt\right)$$

while the cold approach correction factor $Cf_{CAT}$ is calculated in step 110 as:

$$Cf_{CAT} = \alpha\,\varepsilon_{CAT} + \beta\,\frac{d\,\varepsilon_{CAT}}{dt} + \frac{\gamma}{\Delta t\_int}\int_{t-\Delta t\_int}^{t}\varepsilon_{CAT}\,dt$$

In the above calculations $\alpha\,\varepsilon_{HAT}$ is a proportional term and $\alpha$ is a proportional gain (coefficient) of this term. $\alpha$ may have a value of 0.005 to 0.35. $\beta\,\dfrac{d\,\varepsilon_{CAT}}{dt}$ is a derivative term and $\beta$ is a derivative gain (coefficient) of this term. $\beta$ may have a value of 0.35 to 2.0. $\gamma\int\varepsilon_{HAT}$ is an integral term (coefficient) and $\gamma$ is an integral gain of this term. $\gamma$ may have a value of 0.006 to 0.20.

In a next step 111 a correction factor $Cf$ is determined, which factor $Cf$ is to be applied on the control signal U(t) for the pumps 13, 14, also referred to as control parameter U(t), that is used to control the flow rate of the thermal storage medium. In the example of Fig. 1 and 2 the control signal U(t) controls a pump speed but I might just as well, depending on implementation, control a control valve position or some other fluid flow control means. The correction factor $Cf$ is calculated as:

$$Cf = \frac{(Cf_{HAT} + Cf_{CAT})}{2}$$

The steps above may be performed each time step *Ts*. To avoid instabilities and numerical problems, the following limit is applied:

$$Cf \in [-1;-0.005] \;\cup\; [0] \;\cup\; [0.005; 0.999]$$

Thus, in a next step 112 the following limitations and corresponding adjustments are performed:

*if Cf > 0.99 then Cf = 0.99*
*if Cf < -1 then Cf = -1*
*if abs(Cf) < 0.005 then Cf = 0*

In a next step 113 it is determined if the correction factor *Cf* is larger or equal to zero. If this is case the control signal U(t) is in step 114 determined as:

$$U(t) = U(t-Ts) \times (1+Cf) \;(\text{when } Cf \le 0).$$

If the correction factor *Cf* is smaller than zero, then the control signal U(t) is in step 115 determined as:

$$U(t) = \frac{U(t-Ts)}{(1-Cf)} \;(\text{when } Cf > 0).$$

In the last step 116 the control signal U(t) is used by the control unit 17 to control the first pump 13 if the solar thermal plant 1 is in the charge mode, or to control the second pump 14 if the solar thermal plant 1 is in the discharge mode. The maximum value of U(t) is limited to the maximum value allowed by the relevant pump and by the solar thermal plant 1 (capacity, maximum pump speeds etc.). Since the method includes minimizing the first error value $\varepsilon_{HAT}$ and the second error value $\varepsilon_{CAT}$, it follows that the control comprises controlling the flow regulator in form of any of pumps 13 and 14 in dependence of the first error value $\varepsilon_{HAT}$ and the second error value $\varepsilon_{CAT}$. In an alternative embodiment the control is done by regulating the flow of the HTF through the heat exchanger instead of the flow of the thermal storage medium, which means that the control may comprise controlling the flow regulator in form of pump 12 in dependence of the first error value $\varepsilon_{HAT}$ and the second error value $\varepsilon_{CAT}$. However, it is preferred to control the flow of the thermal storage medium.

Since correction factors are also applied, the controlling 116 of the flow regulator in form of pumps 13 and 14 is dependent also on the first and second correction factors $Cf_{HAT}$, $Cf_{CAT}$, which minimizes the first error value $\varepsilon_{HAT}$ as well as the second error value $\varepsilon_{CAT}$.

The method and the control 116 of the flow regulator 13, 14 for minimizing the first and second error values $\varepsilon_{HAT}$ and $\varepsilon_{CAT}$ is performed when passing the second fluid (thermal storage medium) $F_{MS}$ in the first direction, when the solar thermal plant is in the charge mode, as well as when passing the second fluid $F_{MS}$ in the second direction when the solar thermal plant is in the discharge mode.

When the solar thermal plant is in the discharge mode, then the flow of the first fluid $F_{HTF}$ (HTF) and the flow of the second fluid $F_{MS}$ through the first heat exchanger are reversed compared to when the plant 1 is in the charge mode. Then, in step 101, the first temperature $T_{hot_{in}}$ is obtained by measuring a temperature of the second fluid $F_{MS}$ before it passes through the heat exchanger 3, the second temperature $T_{hot_{out}}$ is obtained by measuring a temperature of the second fluid $F_{MS}$ after it has passed through the heat exchanger 3, the third temperature $T_{cold_{in}}$ is obtained by measuring a temperature of the first fluid $F_{HTF}$ before it passes through the heat exchanger 3, and the fourth temperature $T_{cold_{out}}$ is obtained by measuring a temperature of the first fluid $F_{MS}$ after it has passed through the heat exchanger 3.

For handling both the charge mode and the discharge mode of the solar thermal plant 1, the method includes transferring the second fluid $F_{MS}$ from the cold storage 5 to the hot storage 4 via the heat exchanger 3, such that heat is transferred from the first fluid $F_{HTF}$ to the second fluid $F_{MS}$, and transferring the second fluid $F_{MS}$ from the hot storage 4 to the cold storage 3 via the heat exchanger 3, such that heat is transferred from the second fluid $F_{MS}$ to the first fluid $F_{HTF}$, when the flow of the first fluid $F_{HTF}$ and the flow of the second fluid $F_{MS}$ are reversed.

Thus, to implement the automatic control of the flow of thermal storage medium, the necessary measurements are hot fluid inlet and outlet temperatures as well as cold fluid inlet and outlet temperatures. This means that the control does not need to know the flow rate of the hot fluid or the flow rate of the cold fluid. This method will provide a control of the flow rate to maintain the HAT as close as possible to the $HAT_{target}$ and the CAT as close as possible to the $CAT_{target}$. This will be done by controlling the flow of one fluid which could be either cold or hot, but which typically is the thermal storage medium.

The method is similar to control that employs so called PID control (proportional, integral, derivative control) and it is optimized for a heat exchanger as the first heat exchanger 3 when arranged in a solar thermal plant of the exemplified type. The method may be implemented directly in conventional distributed control systems that are commonly used for controlling processes in industries. The control unit 17 may per se thus be a distributed control system.

The predetermined value $HAT_{target}$ has a value that may be empirically determined and typically depends on the type of the first heat exchanger 3, including its structure, size and other properties it has. The predetermined value $CAT_{target}$ has a value that may also be empirically determined and which also depends on the type of the first heat exchanger 3. Each of $HAT_{target}$ and $CAT_{target}$ may be set to zero. Even if this does not always represent realistic values the method may still be successfully used for controlling the flow of the thermal storage medium. Common values for $HAT_{target}$ and $CAT_{target}$ are 1 - 5 °C.

Generally, the method according to the various embodiments disclosed herein may be implemented by a data processing device, such as the control unit 17, which is connected to the pumps 13, 14 and optionally pump 12 for controlling them by sending the control signal U(t). The control unit 17 is also connected to the temperature sensors 21, 22, 23, 24 for acquiring temperature readings $T_{hot_{in}}, T_{hot_{out}}, T_{cold_{in}}, T_{cold_{out}}$.

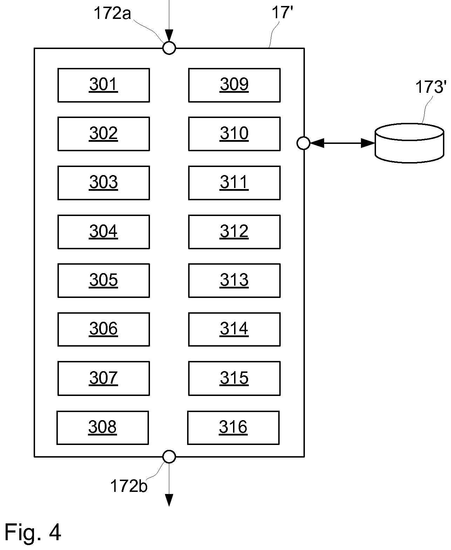

Fig. 4 shows an example of a data processing device 17' configured to implement the method of Fig. 3. The device 17' includes an input 172a for receiving the temperature readings from the sensors 21, 22, 23, 24 and other information such as mode of the solar thermal plant 1 (charge mode or discharge mode, even though this may be calculated by comparing fluid inlet temperatures) and other parameters that are used in the method. The device 17' further includes an obtaining module (or means) 301 for obtaining temperature reading in step 101, a calculation module (or means) 302 for determining $HAT$ in step 102, a calculation module (or means) 303 for determining $CAT$ in step 103, a calculation module (or means) 304 for determining $\varepsilon_{HAT}$ in step 104, a calculation module (or means) 305 for determining $\varepsilon_{CAT}$ in step 105, a determination module (or means) 306 for determining if the second fluid $F_{MS}$ is the cold fluid in step 106, four calculation modules (or means) 307, 308, 309, 310 for determining $Cf_{HAT}$ and $Cf_{CAT}$ in steps 107, 108, 109, 110, a calculation module (or means) 311 for determining $Cf$ in step 111, a determination module (or means) 312 for setting $Cf$ as in step 112, a determination module (or means) 313 for determining if $Cf$ is smaller or equal to zero as in step 113, two control parameter determination modules (or means) 314, 315 for calculating the control parameter U(t) as in steps 114, 115, and a control module (or means) 316 that controls the pumps 13, 14 and optionally pump 12 in accordance with step 116 and as described in connection with Figs 1, 2 and 3.

The device 17' may also have an output 172b for outputting the control parameter U(t) so as to regulate the pumps. As indicated in Fig. 4, the device 17' may be electrically connected to an electronic memory unit 173', e.g. for retrieval of the of target values $HAT_{target}$ and $CAT_{target}$, the coefficients $\alpha$, $\beta$ and $\gamma$, the time step $Ts$, the period $\Delta t_{int}$ and any other parameter that may be used by the method and which may be stored on the memory unit 173'.

The device 17' may be implemented by special-purpose software (or firmware) run on one or more general-purpose or special-purpose computing devices. In this context, it is to be understood that each "module" or "means" of such a computing device refers to a conceptual equivalent of a method step; there is not always a one-to-one correspondence between elements/means and particular pieces of hardware or software routines. One piece of hardware sometimes comprises different modules/means. For example, a processing unit may serve as one module/means when executing one instruction, but serve as another module/means when executing another instruction. In addition, one module/means may be implemented by one instruction in some cases, but by a plurality of instructions in some other cases. Naturally, it is conceivable that one or more modules (means) are implemented entirely by analog hardware components.

The software controlled device 117' may include one or more processing units (cf. 171 in Figs 1 and 2), e.g. a CPU ("Central Processing Unit"), a DSP ("Digital Signal Processor"), an ASIC ("Application-Specific Integrated Circuit"), discrete analog and/or digital components, or some other programmable logical device, such as an FPGA ("Field Programmable Gate Array"). The device 17' may further include a system memory and a system bus that couples various system components including the system memory to the processing unit. The system bus may be any of several types of bus structures including a memory bus or memory controller, a peripheral bus, and a local bus using any of a variety of bus architectures. The system memory may include computer storage media in the form of volatile and/or non-volatile memory such as read only memory (ROM), random access memory (RAM) and flash memory. The special-purpose software, the predetermined values, and any other data needed during execution, may be stored in the system memory, or on other removable/non-removable volatile/non-volatile computer storage media which is included in or accessible to the computing device, such as magnetic media, optical media, flash memory cards, digital tape, solid state RAM, solid state ROM, etc. The device processing unit 17' may include one or more communication interfaces, such as a serial interface, a parallel interface, a USB interface, a wireless interface, a network adapter, etc., as well as one or more data acquisition devices, such as an A/D converter. The special-purpose software may be provided to the device 17' on any suitable computer-readable medium, including a record medium, and a read-only memory. Typically, the device 17' corresponds to the control unit 17 shown in Figs 1 and 2, while the input 172a and the output 172b corresponds to the input/output interface 172 and the memory unit 173' corresponds to the memory unit 173.

It should be noted that the control unit 17 is purposely configured to implement the steps described in connection with Fig. 3, for example by having access to software instructions that implement the steps, and incorporates thus unique properties that distinguishes the control unit 17 from other, prior art control units.

The coefficients $\alpha$ (the proportional gain), $\beta$ (the derivative gain) and $\gamma$ (the integral gain) may have values as indicated above, i.e. $\alpha$ = 0.005 to 0.35, $\beta$ = 0.35 to 2.0 and $\gamma$ = 0.006 to 0.20.

The coefficients $\alpha$, $\beta$, $\gamma$ typically depends on the operating conditions of the solar thermal plant 1, such as fluids quality, flow rates and temperatures, and on the structure and geometry of the first heat exchanger 3, such as size, number of plates etc. In the following the first heat exchanger 3 is a heat exchanger that comprises 200 to 900 heat transfer plates of which each has: i) a plate thickness of 0.8 mm to 1.5 mm, ii) a plate length of 6 m to 14 m, iii) a plate width of 0.7 m to 2 m, iv) a gap of 2.5 mm to 8 mm between heat transfer areas of the heat transfer plates, and v) a corrugation angle of 15° to 45°. In this context, as is commonly known a corrugation angle may the angle by which corrugations of the heat transfer plate is slanted in relation to a normal plane of the heat transfer plate. A gap of 2.5 mm to 8 mm between the heat transfer plates may be understood as a gap of 2.5 mm to 8 mm between the normal planes of the heat transfer plates.

For the exemplified plate heat exchanger with the above properties the coefficients $\alpha$, $\beta$, $\gamma$ may have values within the following ranges: $\alpha$ = 0.005 to 0.35, $\beta$ = 0.35 to 2.0 and $\gamma$ = 0.006 to 0.20. The values may be changed by the control unit 17 depending on if the solar thermal plant 1 is in the charge mode or in the discharge mode. Specifically, for a plate heat exchanger with the above exemplified heat transfer plates, but also for other heat exchangers with other plates, the following coefficients may be used, which may vary within a range of 10%, 20% or even more:

| Charge mode (thermal storage medium: cold fluid; HTF: hot fluid) | Discharge mode (HTF: cold fluid; thermal storage medium: hot fluid) |
| --- | --- |
| $\alpha$ = 0.015 | $\alpha$ = 0.035 |
| $\beta$ = 1.0 | $\beta$ = 0.75 |

(continued)

| Charge mode (thermal storage medium: cold fluid; HTF: hot fluid) | Discharge mode (HTF: cold fluid; thermal storage medium: hot fluid) |
|---|---|
| $\gamma = 0.02$ | $\gamma = 0.02$ |

The above values for the coefficients $\alpha$, $\beta$, $\gamma$ provide good heat transfer results but they could be adjusted as required in dependence of the heat exchanger and on the system the heat exchanger is part of, even on site after operating has commenced.

The coefficients $\alpha$, $\beta$, $\gamma$ may be empirically determined on site but may also be determined by performing some calculations and a simulations. In the latter case two calculation steps may be used, where the first one determines the order of magnitude of the proportional coefficient $\alpha$ and the derivate coefficient $\beta$, and where the second one determines the integral coefficient $\gamma$ and fine tunes the two others $\alpha$, $\beta$.

In the calculations *HAT* has been estimated as $AT = Ae^{-t/\tau} + B$. This formula has been applied for the following values:

| Thermal storage medium flow rate (cold fluid) | HTF flow rate (hot fluid) | Approximation formula | |
|---|---|---|---|
| 100% | 90% | A | -4.92 |
| | | B | 7.50 |
| | | $\tau$ | 205.00 |
| 100% | 80% | A | -13.53 |
| | | B | 16.12 |
| | | $\tau$ | 180.00 |
| 100% | 70% | A | -23.55 |
| | | B | 26.14 |
| | | $\tau$ | 150.00 |
| 100% | 60% | A | -33.92 |
| | | B | 36.51 |
| | | $\tau$ | 120.00 |
| 100% | 50% | A | -44.43 |
| | | B | 47.02 |
| | | $\tau$ | 100.00 |

In the first step for determining the coefficients only the proportional and derivate coefficients are calculated, thus the integral term is neglected, which gives:

$$Cf_{HAT} = \alpha\, \varepsilon_{HAT} + \beta\, \frac{d\, \varepsilon_{HAT}}{dt}$$

where

$$\varepsilon_{HAT} = HAT_{target} - HAT$$

$HAT_{target}$ is the HAT (hot approach temperature) when the flow rates of HTF and thermal storage medium are balanced. This is the case at t = 0, which is the reason why $HAT_{target} = A + B$. Since $HAT = Ae^{-t/\tau} + B$, then $\varepsilon_{HAT} = A(1 - e^{-t/\tau})$.

From this follows that

$$\frac{d\,\varepsilon_{HAT}}{dt} = \frac{A}{\tau}e^{-t/\tau}$$

and

$$Cf_{HAT} = \alpha\,A\big(1 - e^{-t/\tau}\big) + \frac{\beta\,A}{\tau}e^{-t/\tau}$$

$$Cf_{HAT} = \alpha\,A + \left(\frac{\beta\,A}{\tau} - \alpha A\right)e^{-t/\tau}$$

This equality is verified, whatever the time t, if $\alpha\,A = Cf_{HAT}$ and $\left(\frac{\beta\,A}{\tau} - \alpha A\right) = 0$

Thus $\alpha = \frac{Cf_{HAT}}{A}$ and $\beta = \alpha\tau = \frac{Cf_{HAT}\,\tau}{A}$

Then the following proportional and derivate coefficients may be derived:

| Thermal storage medium flow rate (cold fluid) | HTF flow rate (hot fluid) | Approximation formula | | Control system coefficients | |
|---|---|---|---|---|---|
| 100% | 90% | A | -4.92 | $Cf_{HAT}$ | -0.10 |
| | | B | 7.50 | $\alpha$ | 0.0203 |
| | | $\tau$ | 205.00 | $\beta$ | 4.167 |
| 100% | 80% | A | -13.53 | $Cf_{HAT}$ | -0.20 |
| | | B | 16.12 | $\alpha$ | 0.0148 |
| | | $\tau$ | 180.00 | $\beta$ | 2.661 |
| 100% | 70% | A | -23.55 | $Cf_{HAT}$ | -0.30 |
| | | B | 26.14 | $\alpha$ | 0.0127 |
| | | $\tau$ | 150.00 | $\beta$ | 1.911 |
| 100% | 60% | A | -33.92 | $Cf_{HAT}$ | -0.40 |
| | | B | 36.51 | $\alpha$ | 0.0118 |
| | | $\tau$ | 120.00 | $\beta$ | 1.415 |
| 100% | 50% | A | -44.43 | $Cf_{HAT}$ | -0.50 |
| | | B | 47.02 | $\alpha$ | 0.0113 |
| | | $\tau$ | 100.00 | $\beta$ | 1.125 |

As a first approximation, in order to limit the correction, the coefficients of the last calculation may be used, i.e.: $\alpha$ = 0.0113 and $\beta$ = 1.125.

In the second step the integral coefficient $\gamma$ is determined. To do this a conventional algorithm that describes the control system of the solar thermal plant 1 is implemented by using conventional simulation software. Three input data are then used: i) HTF flow rates, ii) HTF inlet temperature and iii) thermal storage medium inlet temperature. The thermal storage medium flow rate may be calculated automatically by controlling the HAT and CAT as described in the algorithms above. The HTF flow rate is not used to determine the thermal storage medium flow rate.

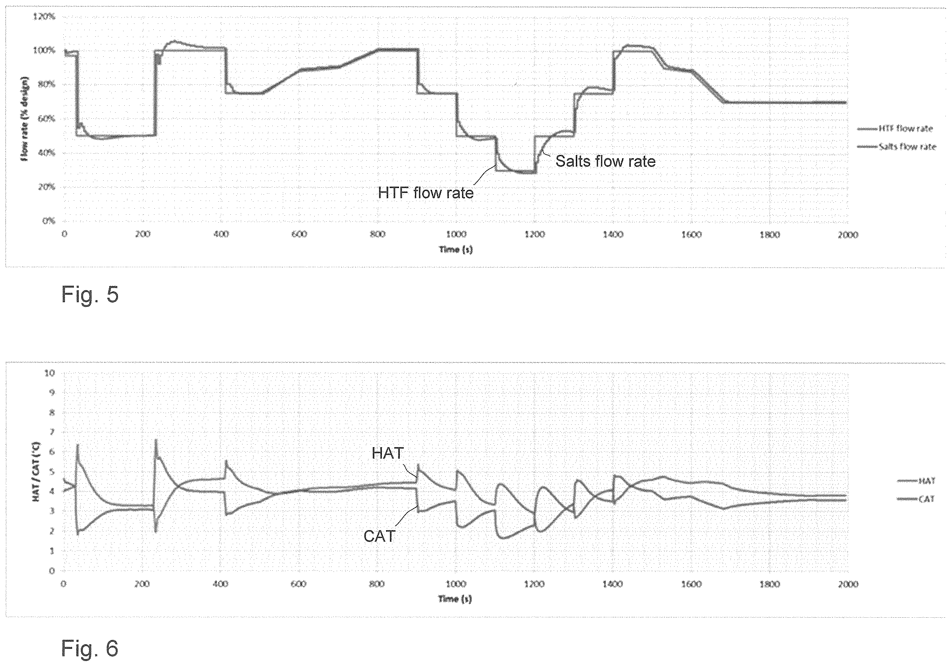

First model of a typical cycle for a heat exchanger is modelled, to see the response, add the integral coefficient $\gamma$ and adjust the proportional coefficient $\alpha$ and the derivate coefficient $\beta$. This calculation is performed iteratively until a satisfactory behavior is obtained. The charts in Figs 5 and 6 show the result of the simulation after several iterations. Here, "salts" in Figs 5 and 6 refers to the thermal storage medium. From these figures it shows that the behavior is satisfactory and the HAT and CAT are well controlled with variations lower than 3.6°C, which is a very acceptable value in terms of process efficiency and thermal stresses.

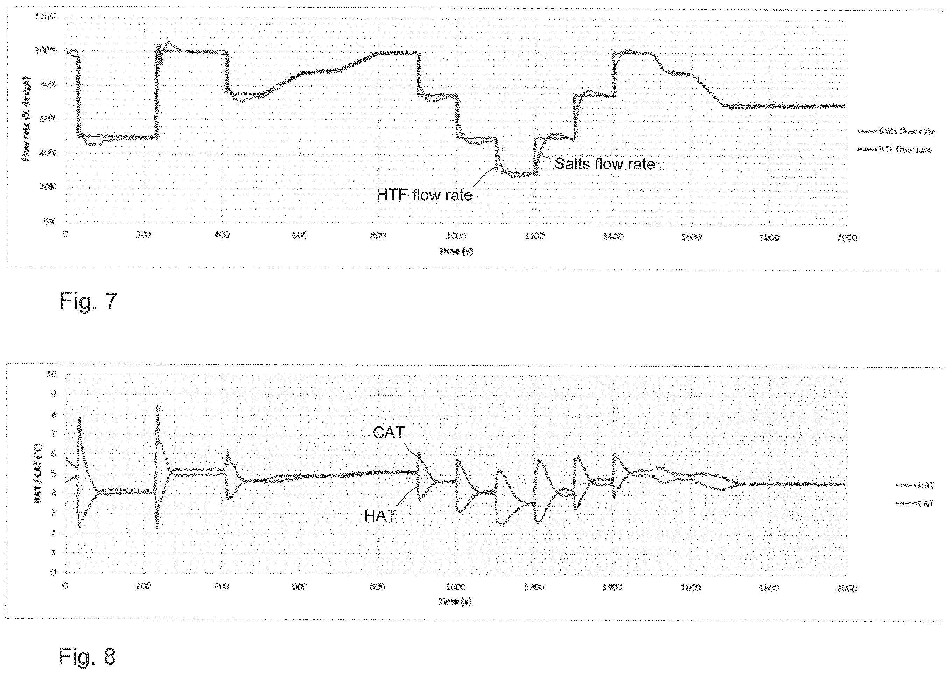

The previous calculation was performed in charge mode, i.e. when the thermal storage medium is the cold fluid and the HTF is the hot fluid. When performing the same calculations for the discharge mode the result will be as shown in Figs 7 and 8. "salts" in Figs 7 and 8 refers to the thermal storage medium. From these figures it shows that the HAT and CAT variations do not exceed 4.5°C in the most severe event (+50% of HTF flow rate instantaneously).

Finally the following coefficients have been chosen, giving the best compromise between reactivity and damping:

| Charge mode (thermal storage medium: cold fluid; HTF: hot fluid) | Discharge mode (HTF: cold fluid; thermal storage medium: hot fluid) |
| --- | --- |
| $\alpha = 0.015$ | $\alpha = 0.035$ |
| $\beta = 1.0$ | $\beta = 0.75$ |
| $\gamma = 0.02$ | $\gamma = 0.02$ |

The above described calculations may be used for determining the coefficients $\alpha$, $\beta$, $\gamma$. Other, conventional techniques within PID control may be used just as well for determining the coefficients $\alpha$, $\beta$, $\gamma$. Alternatively, the coefficients $\alpha$, $\beta$, $\gamma$ are empirically determined. The coefficients $\alpha$, $\beta$, $\gamma$ may be fine-tuned e.g. during operation of the thermal solar plant 1.

When the descried method for controlling a flow of fluid through the heat exchanger 3 is simulated for data obtained from a thermal solar plant in operation in charge mode and for $HAT_{target} = 3.86°C$ and when $HAT_{target} = CAT_{target}$, then it has been observed that the HAT is relatively stable and varies only between 0.5°C and 4°C. When the method for controlling a flow of fluid through the heat exchanger 3 was simulated for data obtained from the thermal solar plant in operation and in discharge mode and for $HAT_{target} = 5.25°C$ and when $HAT_{target} = CAT_{target}$, then it has been observed that the HAT is relatively stable and varies only about 4.5°C.

The invention described hereafter is applicable for all heat exchangers working with two independent fluids. The heat exchanger may operate with concurrent or countercurrent flow and is a plate heat exchanger, which may be a welded-, brazed- or gasket-fitted heat exchanger etc. The method may be used for heat exchangers in other types of industrial, energy and chemical processes than in the exemplified one, including those of other types of solar plants.

Also, the control may be done for any fluid of the two fluids that enters the heat exchanger, even though the control in the described example is executed for the thermal storage medium.

From the description above follows that, although various embodiments of the invention have been described and shown, the invention is not restricted thereto, but may also be embodied in other ways within the scope of the subject-matter defined in the following claims.

**Claims**

1. A method for controlling a flow of fluid in a solar thermal plant (1), the solar thermal plant (1) comprising a heat collector (2) for heating a first fluid ($F_{HTF}$), and a cold storage (5) and a hot storage (4) for a second fluid ($F_{MS}$), which second fluid ($F_{MS}$) has the form of molten salt, and a heat exchanger (3),
the heat exchanger (3) comprising a first fluid channel (35) for passing a first fluid ($F_{HTF}$) through the heat exchanger (3) and a second fluid channel (36) for passing a second fluid ($F_{MS}$) through the heat exchanger (3), such that heat is transferred from the first fluid ($F_{HTF}$) to the second fluid ($F_{MS}$) when the first fluid ($F_{HTF}$) is warmer than the second fluid ($F_{MS}$), and
wherein a flow regulator (13, 14) is arranged to regulate a flow of the second fluid ($F_{MS}$) for passing it in a first direction from the cold storage (5), through the heat exchanger (3) and to the hot storage (4) and in a second direction from the hot storage (4), through the heat exchanger (3) and to the cold storage (5),
the method comprising controlling a flow of fluid through the heat exchanger (3),
wherein the flow regulator (12, 13, 14) is arranged to regulate

- a flow of the first fluid ($F_{HTF}$) passed through the heat exchanger (3), or
- a flow of the second fluid ($F_{MS}$) passed through the heat exchanger (3), the method further comprising:

obtaining (101) a first temperature ($T_{hotin}$) of the first fluid ($F_{HTF}$) before it passes through the heat exchanger (3),
obtaining (101) a second temperature ($T_{hotout}$) of the first fluid ($F_{HTF}$) after it has passed through the heat exchanger (3),
obtaining (101) a third temperature ($T_{coldin}$) of the second fluid ($F_{MS}$) before it passes through the heat exchanger (3),
obtaining (101) a fourth temperature ($T_{coldout}$) of the second fluid ($F_{MS}$) after it has passed through the heat exchanger (3),
and wherein the method is **characterized in**:

determining (102) a first difference ($HAT$) by calculating a difference between the first temperature ($T_{hotin}$) and the fourth temperature ($T_{coldout}$),
determining (103) a second difference ($CAT$) by calculating a difference between the second temperature ($T_{hotout}$) and the third temperature ($T_{coldin}$),
determining (104) a first error value ($\varepsilon_{HAT}$) by calculating a difference between a first, predetermined value ($HAT_{target}$) and the first difference ($HAT$),
determining (105) a second error value ($\varepsilon_{CAT}$) by calculating a difference between a second, predetermined value ($CAT_{target}$) and the second difference (CAT), and
controlling (116) the flow regulator (12, 13, 14) in dependence of the first error value ($\varepsilon_{HAT}$) and the second error value ($\varepsilon_{CAT}$),
whereby the first error value ($\varepsilon_{HAT}$) and the second error value ($\varepsilon_{CAT}$) are minimized when passing the second fluid ($F_{MS}$) in the first direction as well as when passing the second fluid ($F_{MS}$) in the second direction, whereby the heat exchanger (3) is a plate heat exchanger and comprises 200 to 900 heat transfer plates of which each has:

- a plate thickness of 0.8 mm to 1.5 mm,
- a plate length of 6 m to 14 m,
- a plate width of 0.7 m to 2 m,
- a gap of 2.5 mm to 8 mm between the heat transfer plates, and
- a corrugation angle of 15° to 45°.

2. A method according to claim 1, comprising:
   controlling (116) the flow regulator (12, 13,14) so as to minimize the first error value ($\varepsilon_{HAT}$) and the second error value ($\varepsilon_{CAT}$).

3. A method according to claim 2, comprising:

   determining (107) a first correction factor ($Cf_{HAT}$) based on a proportional term ($\alpha\,\varepsilon_{HAT}$) of the first error value ($\varepsilon_{HAT}$),
   determining (108) a second correction factor ($Cf_{CAT}$) based on a proportional term ($\alpha\,\varepsilon_{CAT}$) of the second error value ($\varepsilon_{CAT}$), and
   controlling (116) the flow regulator (12, 13, 14) in dependence of the first and second correction factors ($Cf_{HAT}$, $Cf_{CAT}$) so as to minimize the first error value ($\varepsilon_{HAT}$) and the second error value ($\varepsilon_{CAT}$).

4. A method according to claim 3, comprising:

   determining (107) the first correction factor ($Cf_{HAT}$) based on an integral term ($\gamma\int \varepsilon_{HAT}$) of the first error value ($\varepsilon_{HAT}$), and
   determining (108) the second correction factor ($Cf_{CAT}$) based on an integral term ($\gamma\int \varepsilon_{CAT}$) of the second error value ($\varepsilon_{HAT}$).

5. A method according to claim 3 or 4, comprising:

   determining (107) the first correction factor ($Cf_{HAT}$) based on a derivative term $\left(\beta\,\dfrac{d\,\varepsilon_{HAT}}{dt}\right)$ of the first error value ($\varepsilon_{HAT}$), and

   determining (108) the second correction factor ($Cf_{CAT}$) based on a derivative term $\left(\beta\,\dfrac{d\,\varepsilon_{CAT}}{dt}\right)$ of the second error value ($\varepsilon_{CAT}$).

6. A method according to any one of claims 1 - 5, comprising, when the flow of the first fluid ($F_{HTF}$) and the flow of the second fluid ($F_{MS}$) are reversed and when the first fluid ($F_{HTF}$) is colder than the second fluid ($F_{MS}$) for transferring heat from the second fluid ($F_{MS}$) to the first fluid ($F_{HTF}$):

obtaining (101) the first temperature ($T_{hot_{in}}$) by measuring a temperature of the second fluid ($F_{MS}$) before it passes through the heat exchanger (3),
obtaining (101) the second temperature ($T_{hot_{out}}$) by measuring a temperature of the second fluid ($F_{MS}$) after it has passed through the heat exchanger (3),
obtaining (101) the third temperature ($T_{cold_{in}}$) by measuring a temperature of the first fluid ($F_{HTF}$) before it passes through the heat exchanger (3), and
obtaining (101) the fourth temperature ($T_{cold_{out}}$) by measuring a temperature of the first fluid ($F_{MS}$) after it has passed through the heat exchanger (3).

7. A method according to claim 6, wherein the first fluid ($F_{HTF}$) is heated by solar energy and the second fluid ($F_{MS}$) is used for storing heat, the method comprising
transferring the second fluid ($F_{MS}$) from a cold storage (5) to a hot storage (4) via the heat exchanger (3), when heat is transferred from the first fluid ($F_{HTF}$) to the second fluid ($F_{MS}$), and
transferring the second fluid ($F_{MS}$) from the hot storage (4) to the cold storage (3) via the heat exchanger (3), such that heat is transferred from the second fluid ($F_{MS}$) to the first fluid ($F_{HTF}$), when the flow of the first fluid ($F_{HTF}$) and the flow of the second fluid ($F_{MS}$) are reversed and heat is transferred from the second fluid ($F_{MS}$) to the first fluid ($F_{HTF}$).

8. A method according to any one of claims 1 - 10, wherein the controlling (116) of the flow regulator (12, 13, 14) in dependence of the first error value ($\varepsilon_{HAT}$) and the second error value ($\varepsilon_{CAT}$) regulates the flow of the second fluid ($F_{MS}$) only.

9. A method according to claim 3, wherein the proportional term ($\alpha\,\varepsilon_{HAT}$) comprises a proportional gain ($\alpha$) that has a value of 0.005 to 0.35.

10. A method according to claim 4, wherein the integral term ($\gamma\int\varepsilon_{HAT}$) comprises an integral gain ($\gamma$) that has a value of 0.006 to 0.20.

11. A method according to claim 5, wherein the derivative term $\left(\beta\,\dfrac{d\,\varepsilon_{CAT}}{dt}\right)$ comprises a derivative gain ($\beta$) that has a value of 0.35 to 2.0.

**Patentansprüche**

1. Verfahren zum Steuern eines Fluidstroms in einer Solarthermieanlage (1),
wobei die Solarthermieanlage (1) einen Wärmekollektor (2) zum Erhitzen eines ersten Fluids ($F_{HTF}$) und einen kalten Speicher (5) und einen warmen Speicher (4) für ein zweites Fluid ($F_{MS}$) beinhaltet, wobei das zweite Fluid ($F_{MS}$) die Form von geschmolzenem Salz besitzt, und einen Wärmetauscher (3) beinhaltet,
wobei der Wärmetauscher (3) einen ersten Fluidkanal (35) zum Leiten eines ersten Fluids ($F_{HTF}$) durch den Wärmetauscher (3) und einen zweiten Fluidkanal (36) zum Leiten eines zweiten Fluids ($F_{MS}$) durch den Wärmetauscher (3) in der Weise beinhaltet, dass Wärme vom ersten Fluid ($F_{HTF}$) an das zweite Fluid ($F_{MS}$) übertragen wird, wenn das erste Fluid ($F_{HTF}$) wärmer ist als das zweite Fluid ($F_{MS}$), und wobei ein Strömungsregler (13, 14) angeordnet ist, um einen Strom des zweiten Fluids ($F_{MS}$) zu regeln, um diesen in eine erste Richtung vom kalten Speicher (5) durch den Wärmetauscher (3) und zum warmen Speicher (4) und in eine zweite Richtung vom warmen Speicher (4) durch den Wärmetauscher (3) und zum kalten Speicher (5) zu leiten,
wobei das Verfahren Folgendes Steuern eines Fluidstroms durch den Wärmetauscher (3) beinhaltet,
wobei der Strömungsregler (12, 13, 14) angeordnet ist, um Folgendes zu regeln:

- einen Strom des ersten Fluids ($F_{HTF}$), welcher durch den Wärmetauscher (3) geleitet wird, oder
- einen Strom des zweiten Fluids ($F_{MS}$), welcher durch den Wärmetauscher (3) geleitet wird, wobei das Verfahren zudem Folgendes beinhaltet:

Erzielen (101) einer ersten Temperatur ($T_{hotin}$) des ersten Fluids ($F_{HTF}$), bevor dieses durch den Wärmetauscher (3) strömt,
Erzielen (101) einer zweiten Temperatur ($T_{hotout}$) des ersten Fluids ($F_{HTF}$), nachdem dieses durch den Wärmetauscher (3) geströmt ist,

Erzielen (101) einer dritten Temperatur ($T_{coldin}$) des zweiten Fluids ($F_{MS}$), bevor dieses durch den Wärmetauscher (3) strömt,
Erzielen (101) einer vierten Temperatur ($T_{coldout}$) des zweiten Fluids ($F_{MS}$), nachdem dieses durch den Wärmetauscher (3) geströmt ist, und wobei das Verfahren **gekennzeichnet ist durch**:

Bestimmen (102) einer ersten Differenz (*HAT*) **durch** Berechnen einer Differenz zwischen der ersten Temperatur ($T_{hotin}$) und der vierten Temperatur ($T_{coldout}$),
Bestimmen (103) einer zweiten Differenz (*CAT*) **durch** Berechnen einer Differenz zwischen der zweiten Temperatur ($T_{hotout}$) und der dritten Temperatur ($T_{coldin}$),
Bestimmen (104) eines ersten Fehlerwertes ($\varepsilon_{HAT}$) **durch** Berechnen einer Differenz zwischen einem ersten, vorbestimmten Wert (*HAT$_{target}$*) und der ersten Differenz (*HAT*),
Bestimmen (105) eines zweiten Fehlerwertes ($\varepsilon_{CAT}$) **durch** Berechnen einer Differenz zwischen einem zweiten, vorbestimmten Wert (*CAT$_{target}$*) und der zweiten Differenz (CAT), und
Steuern (116) des Strömungsreglers (12, 13, 14) in Abhängigkeit vom ersten Fehlerwert ($\varepsilon_{HAT}$) und vom zweiten Fehlerwert ($\varepsilon_{CAT}$),
wodurch der erste Fehlerwert ($\varepsilon_{HAT}$) und der zweite Fehlerwert ($\varepsilon_{CAT}$) beim Leiten des zweiten Fluids ($F_{MS}$) in die erste Richtung sowie beim Leiten des zweiten Fluids ($F_{MS}$) in die zweite Richtung minimiert werden,
wodurch der Wärmetauscher (3) ein Plattenwärmetauscher ist und 200 bis 900 Wärmeübertragungsplatten beinhaltet, welche jeweils Folgendes besitzen:

- eine Plattendicke von 0,8 mm bis 1,5 mm,
- eine Plattenlänge von 6 m bis 14 m,
- eine Plattenbreite von 0,7 m bis 2 m,
- einen Spalt von 2,5 mm bis 8 mm zwischen den Wärmeübertragungsplatten, und
- einen Wellenwinkel von 15° bis 45°.

2. Verfahren nach Anspruch 1, welches Folgendes beinhaltet:
Steuern (116) des Strömungsreglers (12, 13,14) zum Minimieren des ersten Fehlerwertes ($\varepsilon_{HAT}$) und des zweiten Fehlerwertes ($\varepsilon_{CAT}$);

3. Verfahren nach Anspruch 2, welches Folgendes beinhaltet:

Bestimmen (107) eines ersten Korrekturfaktors (*Cf$_{HAT}$*), basierend auf einem proportionalen Term ($\alpha\ \varepsilon_{HAT}$) des ersten Fehlerwertes ($\varepsilon_{HAT}$),
Bestimmen (108) eines zweiten Korrekturfaktors (*Cf$_{CAT}$*) basierend auf einem proportionalen Term ($\alpha\ \varepsilon_{CAT}$) des zweiten Korrekturfaktors ($\varepsilon_{CAT}$), und
Steuern (116) des Strömungsreglers (12, 13, 14) in Abhängigkeit vom ersten und vom zweiten Korrekturfaktor (*Cf$_{HAT}$*, *Cf$_{CAT}$*) zum Minimieren des ersten Fehlerwertes ($\varepsilon_{HAT}$) und des zweiten Fehlerwertes ($\varepsilon_{CAT}$).

4. Verfahren nach Anspruch 3, welches Folgendes beinhaltet:

Bestimmen (107) des ersten Korrekturfaktors (*Cf$_{HAT}$*), basierend auf einem integralen Term ($\gamma\int\varepsilon_{HAT}$) des ersten Fehlerwertes ($\varepsilon_{HAT}$), und
Bestimmen (108) des zweiten Korrekturfaktors (*Cf$_{CAT}$*), basierend auf einem integralen Term ($\gamma\int\varepsilon_{CAT}$) des zweiten Fehlerwertes ($\varepsilon_{HAT}$), und

5. Verfahren nach Anspruch 3 oder 4, welches Folgendes beinhaltet:

Bestimmen (107) des ersten Korrekturfaktors (*Cf$_{HAT}$*), basierend auf einem abgeleiteten Term $\left(\beta\ \frac{d\ \varepsilon_{HAT}}{dt}\right)$ des ersten Fehlerwertes ($\varepsilon_{HAT}$), und

Bestimmen (108) des zweiten Korrekturfaktors (*Cf$_{CAT}$*), basierend auf einem abgeleiteten Term $\left(\beta\ \frac{d\ \varepsilon_{CAT}}{dt}\right)$ des zweiten Fehlerwertes ($\varepsilon_{CAT}$).

6. Verfahren nach einem der Ansprüche 1 bis 5, welches, wenn der Strom des ersten Fluids ($F_{HTF}$) und der Strom des zweiten Fluids ($F_{MS}$) umgekehrt sind und wenn das erste Fluid ($F_{HTF}$) kälter ist als das zweite Fluid ($F_{MS}$), zum Übertragen von Wärme vom zweiten Fluid ($F_{MS}$) an das erste Fluid ($F_{HTF}$) Folgendes beinhaltet:

Erzielen (101) der ersten Temperatur ($T_{hotin}$) durch Messen einer Temperatur des zweiten Fluids ($F_{MS}$), bevor dieses durch den Wärmetauscher (3) strömt,
Erzielen (101) der zweiten Temperatur ($T_{hotout}$) durch Messen einer Temperatur des zweiten Fluids ($F_{MS}$), nachdem dieses durch den Wärmetauscher (3) geströmt ist,
Erzielen (101) der dritten Temperatur ($T_{hotin}$) durch Messen einer Temperatur des ersten Fluids ($F_{HTF}$), bevor dieses durch den Wärmetauscher (3) strömt, und
Erzielen (101) der vierten Temperatur ($T_{hotout}$) durch Messen einer Temperatur des ersten Fluids ($F_{MS}$), nachdem dieses durch den Wärmetauscher (3) geströmt ist.

7. Verfahren nach Anspruch 6, bei welchem das erste Fluid ($F_{HTF}$) durch Sonnenenergie erhitzt wird und das zweite Fluid ($F_{MS}$) zum Speichern von Wärme verwendet wird, wobei das Verfahren Folgendes beinhaltet:

Übertragen des zweiten Fluids ($F_{MS}$) von einem kalten Speicher (5) an einen warmen Speicher (4) über den Wärmetauscher (3), wenn Wärme vom ersten Fluid ($F_{HTF}$) an das zweite Fluid ($F_{MS}$) übertragen wird, und
Übertragen des zweiten Fluids ($F_{MS}$) vom warmen Speicher (4) an den kalten Speicher (3) über den Wärmetauscher (3) in einer Weise, dass Wärme vom zweiten Fluid ($F_{MS}$) an das erste Fluid ($F_{HTF}$) übertragen wird, wenn der Strom des ersten Fluids ($F_{HTF}$) und der Strom des zweiten Fluids ($F_{MS}$) umgekehrt sind und Wärme vom zweiten Fluid ($F_{MS}$) an das erste Fluid ($F_{HTF}$) übertragen wird.

8. Verfahren nach einem der Ansprüche 1 bis 10, bei welchem das Steuern (116) des Strömungsreglers (12, 13, 14) in Abhängigkeit vom ersten Fehlerwert ($\varepsilon_{HAT}$) und vom zweiten Fehlerwert ($\varepsilon_{CAT}$) nur den Strom des zweiten Fluids ($F_{MS}$) regelt.

9. Verfahren nach Anspruch 3, bei welchem der proportionale Term ($\alpha\, \varepsilon_{HAT}$) eine proportionale Verstärkung ($\alpha$) beinhaltet, welche einen Wert von 0,005 bis 0,35 beträgt.

10. Verfahren nach Anspruch 4, bei welchem der integrale Term ($\gamma \int \varepsilon_{HAT}$) eine integrale Verstärkung ($\gamma$) beinhaltet, welche einen Wert von 0,006 bis 0,20 beträgt.

11. Verfahren nach Anspruch 5, bei welchem der abgeleitete Term $\left(\beta\, \frac{d\, \varepsilon_{CAT}}{dt}\right)$ eine abgeleitete Verstärkung ($\beta$) beinhaltet, welche einen Wert von 0,35 bis 2,0 beträgt.

## Revendications

1. Procédé de commande d'un écoulement de fluide dans une centrale solaire thermique (1), la centrale solaire thermique (1) comprenant un collecteur de chaleur (2) permettant de chauffer un premier fluide ($F_{HTF}$), et un stockage à froid (5) et un stockage à chaud (4) pour un second fluide ($F_{MS}$), ledit second fluide ($F_{MS}$) présentant la forme d'un sel fondu, et un échangeur de chaleur (3),
l'échangeur de chaleur (3) comprenant un premier canal de fluide (35) permettant de faire passer un premier fluide ($F_{HTF}$) à travers l'échangeur de chaleur (3) et un second canal de fluide (36) permettant de faire passer un second fluide ($F_{MS}$) à travers l'échangeur de chaleur (3), de sorte que la chaleur soit transférée du premier fluide ($F_{HTF}$) au second fluide ($F_{MS}$), lorsque le premier fluide ($F_{HTF}$) est plus chaud que le second fluide ($F_{MS}$), et dans lequel un régulateur d'écoulement (13, 14) est agencé afin de réguler un écoulement du second fluide ($F_{MS}$) afin de le faire passer dans une première direction depuis le stockage à froid (5), à travers l'échangeur de chaleur (3) et vers le stockage à chaud (4) et dans une seconde direction du stockage à chaud (4), à travers l'échangeur de chaleur (3) et vers le stockage à froid (5),
le procédé comprenant la commande d'un écoulement de fluide à travers l'échangeur de chaleur (3),
dans lequel le régulateur d'écoulement (12, 13, 14) est agencé afin de réguler

- un écoulement du premier fluide ($F_{HTF}$) passé à travers l'échangeur de chaleur (3), ou
- un écoulement du second fluide ($F_{MS}$) passé à travers l'échangeur de chaleur (3), le procédé comprenant en outre :

l'obtention (101) d'une première température ($T_{hotin}$) du premier fluide ($F_{HTF}$) avant qu'il ne passe à travers l'échangeur de chaleur (3),
l'obtention (101) d'une deuxième température ($T_{hot_{out}}$) du premier fluide ($F_{HTF}$) après qu'il est passé à travers l'échangeur de chaleur (3),
l'obtention (101) d'une troisième température ($T_{cold_{in}}$) du second fluide ($F_{MS}$) avant qu'il ne passe à travers l'échangeur de chaleur (3),
l'obtention (101) d'une quatrième température ($T_{cold_{out}}$) du second fluide ($F_{MS}$) après qu'il est passé à travers l'échangeur de chaleur (3),
et dans lequel le procédé est **caractérisé par** :

la détermination (102) d'une première différence (*HAT*) en calculant une différence entre la première température ($T_{hot_{in}}$) et la quatrième température ($T_{cold_{out}}$),
la détermination (103) d'une seconde différence (*CAT*) en calculant une différence entre la deuxième température ($T_{hot_{out}}$) et la troisième température ($T_{cold_{in}}$),
la détermination (104) d'une première valeur d'erreur ($\varepsilon_{HAT}$) en calculant une différence entre une première valeur prédéterminée (*HAT<sub>target</sub>*) et la première différence (*HAT*),
la détermination (105) d'une seconde valeur d'erreur ($\varepsilon_{CAT}$) en calculant une différence entre une seconde valeur prédéterminée (*CAT<sub>target</sub>*) et la seconde différence (*CAT*), et
la commande (116) du régulateur d'écoulement (12, 13, 14) en fonction de la première valeur d'erreur ($\varepsilon_{HAT}$) et de la seconde valeur d'erreur ($\varepsilon_{CAT}$),
moyennant quoi la première valeur d'erreur ($\varepsilon_{HAT}$) et la seconde valeur d'erreur ($\varepsilon_{CAT}$) sont minimisées lors du passage du second fluide ($F_{MS}$) dans la première direction ainsi que lors du passage du second fluide ($F_{MS}$) dans la seconde direction,
moyennant quoi l'échangeur de chaleur (3) est un échangeur de chaleur à plaques et comprend 200 à 900 plaques de transfert de chaleur dont chacune présente :

- une épaisseur de plaque comprise entre 0,8 mm et 1,5 mm,
- une longueur de plaque comprise entre 6 m et 14 m,
- une largeur de plaque comprise entre 0,7 m et 2 m
- un intervalle compris entre 2,5 mm et 8 mm entre les plaques de transfert de chaleur, et
- un angle d'ondulation compris entre 15° et 45°.

**2.** Procédé selon la revendication 1, comprenant :
la commande (116) d'un régulateur d'écoulement (12, 13, 14) de façon à minimiser la première valeur d'erreur ($\varepsilon_{HAT}$) et la seconde valeur d'erreur ($\varepsilon_{CAT}$).

**3.** Procédé selon la revendication 2, comprenant :

la détermination (107) d'un premier facteur de correction (*Cf<sub>HAT</sub>*) basé sur un terme proportionnel ($\alpha\ \varepsilon_{HAT}$) de la première valeur d'erreur ($\varepsilon_{HAT}$),
la détermination (108) d'un second facteur de correction (*Cf<sub>CAT</sub>*) basé sur un terme proportionnel ($\alpha\ \varepsilon_{CAT}$) de la seconde valeur d'erreur ($\varepsilon_{CAT}$), et
la commande (116) du régulateur d'écoulement (12, 13, 14) en fonction du premier et du second facteur de correction (*Cf<sub>HAT</sub>*, *Cf<sub>CAT</sub>*) de façon à minimiser la première valeur d'erreur ($\varepsilon_{HAT}$) et la seconde valeur d'erreur ($\varepsilon_{CAT}$).

**4.** Procédé selon la revendication 3, comprenant :

la détermination (107) du premier facteur de correction (*Cf<sub>HAT</sub>*) basé sur un terme intégral ($\gamma \int \varepsilon_{HAT}$) de la première valeur d'erreur ($\varepsilon_{HAT}$), et
la détermination (108) d'un second facteur de correction (*Cf<sub>CAT</sub>*) basé sur un terme intégral ($\gamma \int \varepsilon_{CAT}$) de la seconde valeur d'erreur ($\varepsilon_{HAT}$).

**5.** Procédé selon la revendication 3 ou 4, comprenant :

la détermination (107) du premier facteur de correction (*Cf<sub>HAT</sub>*) basé sur un terme dérivé $\left(\beta\ \dfrac{d\ \varepsilon_{HAT}}{dt}\right)$ de la première valeur d'erreur ($\varepsilon_{HAT}$), et

la détermination (108) d'un second facteur de correction ($Cf_{CAT}$) basé sur un terme intégral $\left( \beta \ \dfrac{d \ \varepsilon_{CAT}}{dt} \right)$ de la seconde valeur d'erreur ($\varepsilon_{CAT}$).

6. Procédé selon l'une quelconque des revendications 1 à 5, comprenant, lorsque l'écoulement du premier fluide ($F_{HTF}$) et l'écoulement du second fluide ($F_{MS}$) sont inversés et lorsque le premier fluide ($F_{HTF}$) est plus froid que le second fluide ($F_{MS}$) afin de transférer de la chaleur du second fluide ($F_{MS}$) au premier fluide ($F_{HTF}$) :

l'obtention (101) de la première température ($T_{hot_{in}}$) en mesurant une température du second fluide ($F_{MS}$), avant qu'il ne passe à travers l'échangeur de chaleur (3),
l'obtention (101) de la deuxième température ($T_{hot_{out}}$) en mesurant une température du second fluide ($F_{MS}$), après qu'il est passé à travers l'échangeur de chaleur (3),
l'obtention (101) de la troisième température ($T_{cold_{in}}$) en mesurant une température du premier fluide ($F_{HTF}$), avant qu'il ne passe à travers l'échangeur de chaleur (3), et
l'obtention (101) de la quatrième température ($T_{cold_{out}}$) en mesurant une température du premier fluide ($F_{MS}$), après qu'il est passé à travers l'échangeur de chaleur (3).

7. Procédé selon la revendication 6, dans lequel le premier fluide ($F_{HTF}$) est chauffé par l'énergie solaire et le second fluide ($F_{MS}$) est utilisé afin de stocker de la chaleur, le procédé comprenant
le transfert du second fluide ($F_{MS}$) d'un stockage à froid (5) à un stockage à chaud (4) via l'échangeur de chaleur (3), lorsque la chaleur est transférée du premier fluide ($F_{HTF}$) au second fluide ($F_{MS}$), et
le transfert du second fluide ($F_{MS}$) du stockage à chaud (4) au stockage à froid (3) via l'échangeur de chaleur (3), de sorte que la chaleur soit transférée du second fluide ($F_{MS}$) au premier fluide ($F_{HTF}$), lorsque l'écoulement du premier fluide ($F_{HTF}$) et l'écoulement du second fluide ($F_{MS}$) sont inversés et que la chaleur est transférée du second fluide ($F_{MS}$) au premier fluide ($F_{HTF}$).

8. Procédé selon l'une quelconque des revendications 1 à 10, dans lequel la commande (116) du régulateur d'écoulement (12, 13, 14) en fonction de la première valeur d'erreur ($\varepsilon_{HAT}$) et de la seconde valeur d'erreur ($\varepsilon_{CAT}$) régule uniquement l'écoulement du second fluide ($F_{MS}$).

9. Procédé selon la revendication 3, dans lequel le terme proportionnel ($\alpha \ \varepsilon_{HAT}$) comprend un gain proportionnel ($\alpha$) présentant une valeur comprise entre 0,005 et 0,35.

10. Procédé selon la revendication 4, dans lequel le terme intégral ($\gamma \int \varepsilon_{HAT}$) comprend un gain intégral ($\gamma$) présentant une valeur comprise entre 0,006 et 0,20.

11. Procédé selon la revendication 5, dans lequel le terme dérivé $\left( \beta \ \dfrac{d \ \varepsilon_{CAT}}{dt} \right)$ comprend un gain dérivé ($\beta$) présentant une valeur comprise entre 0,35 et 2,0.

Fig. 1

Fig. 2

101: obtain $(T_{hot_{in}})$, $(T_{hot_{out}})$, $(T_{cold_{in}})$, $(T_{cold_{out}})$

$\downarrow$

102: $HAT = T_{hot_{in}} - T_{cold_{out}}$

$\downarrow$

103: $CAT = T_{hot_{out}} - T_{cold_{in}}$

$\downarrow$

104: $\varepsilon_{HAT} = HAT_{target} - HAT$

$\downarrow$

105: $\varepsilon_{CAT} = CAT_{target} - CAT$

$\downarrow$

106: $F_{MS}$ cold fluid? — no →

yes $\downarrow$

107: $Cf_{HAT} = \alpha\,\varepsilon_{HAT} + \beta\,\dfrac{d\,\varepsilon_{HAT}}{dt} + \dfrac{\gamma}{\Delta t\_int}\int_{t-\Delta t\_int}^{t} \varepsilon_{HAT}\,dt$

$\downarrow$

108: $Cf_{CAT} = -\left(\alpha\,\varepsilon_{CAT} + \beta\,\dfrac{d\,\varepsilon_{CAT}}{dt} + \dfrac{\gamma}{\Delta t\_int}\int_{t-\Delta t\_int}^{t} \varepsilon_{CAT}\,dt\right)$

$\downarrow$

109: $Cf_{HAT} = -\left(\alpha\,\varepsilon_{HAT} + \beta\,\dfrac{d\,\varepsilon_{HAT}}{dt} + \dfrac{\gamma}{\Delta t\_int}\int_{t-\Delta t\_int}^{t} \varepsilon_{HAT}\,dt\right)$

$\downarrow$

110: $Cf_{CAT} = \alpha\,\varepsilon_{CAT} + \beta\,\dfrac{d\,\varepsilon_{CAT}}{dt} + \dfrac{\gamma}{\Delta t\_int}\int_{t-\Delta t\_int}^{t} \varepsilon_{CAT}\,dt$

$\downarrow$

111: $Cf = \dfrac{(Cf_{HAT} + Cf_{CAT})}{2}$

$\downarrow$

112: $if\ Cf > 0.99\ then\ Cf = 0.99$
$if\ Cf < -1\ then\ Cf = -1$
$if\ abs(Cf) < 0.005\ then\ Cf = 0$

$\downarrow$

113: $\leq 0$ ? — no →

yes $\downarrow$

114: $U(t) = U(t - Ts) \times (1 + Cf)$

115: $U(t) = \dfrac{U(t - Ts)}{(1 - Cf)}$

116: Control

Fig. 3

Fig. 4

Fig. 5

Fig. 6

Fig. 7

Fig. 8

**EP 2 918 961 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2275649 A1